# EUROPEAN PATENT SPECIFICATION

(11) **EP 2 710 765 B1**
(45) Date of publication and mention of the grant of the patent: **10.04.2019**
(21) Application number: 11865943.2
(22) Date of filing: 19.05.2011
(51) Int. Cl.: G06Q 50/00, G06F 9/54, H04W 4/12

(54) **SYSTEM AND METHOD FOR ASSOCIATING INFORMATION WITH A CONTACT PROFILE ON AN ELECTRONIC COMMUNICATION DEVICE**
SYSTEM UND VERFAHREN ZUM ZUORDNEN EINER INFORMATION ZU EINEM KONTAKTPROFIL BEI EINER ELEKTRONISCHEN KOMMUNIKATIONSVORRICHTUNG
SYSTÈME ET PROCÉDÉ D'ASSOCIATION D'INFORMATIONS À UN PROFIL DE CONTACT SUR UN DISPOSITIF DE COMMUNICATION ÉLECTRONIQUE

(43) Date of publication of application: 26.03.2014
(73) Proprietor: BlackBerry Limited, Waterloo, ON N2K 0A7 (CA)
(72) Inventor: TANEJA, Munish, Toronto, Ontario M6K 3S2 (CA)
(74) Representative: MERH-IP Matias Erny Reichl Hoffmann Patentanwälte PartG mbB
(86) International application number: PCT/CA2011/000571
(87) International publication number: WO 2012/155231

(56) References cited:
- EP-A2- 2 077 506
- US-A1- 2005 262 521
- US-A1- 2005 262 521
- US-A1- 2005 266 835
- US-A1- 2008 002 888
- US-A1- 2009 228 792
- US-A1- 2010 217 809
- US-A1- 2010 306 185
- US-A1- 2011 113 320
- US-A1- 2011 113 320

## Description

### TECHNICAL FIELD

The following relates generally to systems and methods for associating information with a contact profile on an electronic communication device.

### BACKGROUND

Mobile communication devices are often used to communicate via several different media. For example, a smart phone or personal digital assistant (PDA) having wireless communication capabilities may be used to participate in cellular telephone conversations, to exchange email, to exchange short messaging service (SMS) or multimedia messaging service (MMS) messages, to participate in instant messaging (IM or IMing) or other conversational type message exchanges, to post or receive social networking updates, receive data from web-based services, etc.
US 2010/0306185 A1 discloses a self populating address book.
US 2005/0262521 A1 discloses user specified transfer of data between applications.
US 2011/0113320 A1 discloses a network-accessible collaborative annotation tool.

### BRIEF DESCRIPTION OF THE DRAWINGS

Embodiments will now be described by way of example only with reference to the appended drawings wherein:
FIG. 1 is a block diagram of an example wireless communication system.
FIG. 2 is a block diagram of an example wireless communication system including a peer-to-peer (P2P) system.
FIG. 3 is a block diagram of an example communication of a multi-cast P2P message via the P2P system of FIG. 1.
FIG. 4 is a block diagram illustrating an example P2P message.
FIG. 5 is a block diagram illustrating an example configuration for a mobile device including a data tagging module.
FIG. 6 is a screen shot illustrating an example graphical user interface (GUI) for an instant messaging conversation.
FIG. 7 is a screen shot illustrating an example GUI for an email thread.
FIG. 8 is a screen shot illustrating an example GUI for an SMS thread.
FIG. 9 is a screen shot illustrating an example GUI for an email thread including a link to web-based content.
FIG. 10 is a screen shot illustrating an example GUI for a web browser displaying web based content accessed via a link in a data communication.
FIG. 11 is a screen shot illustrating an example GUI for an email thread including an attachment.
FIG. 12 is a screen shot illustrating an example GUI for an application displaying content from an attachment to a data communication.
FIG. 13 is a screen shot illustrating an example GUI for a content tagging prompt.
FIG. 14 is flow chart illustrating an example set of computer executable operations that may be performed in enabling content to be tagged in association with a contact.
FIG. 15 is a screen shot illustrating an example GUI for a contact profile including a portion displaying tagged content.
FIG. 16 is flow chart illustrating an example set of computer executable operations that may be performed in enabling tagged content to be categorized.
FIG. 17 is flow chart illustrating an example set of computer executable operations that may be performed in enabling tagged content to be edited.
FIG. 18 is flow chart illustrating an example set of computer executable operations that may be performed in enabling tagged content to be added to one or more other contact profiles.
FIG. 19 is a screen shot illustrating an example GUI for an application including tagged information in a banner.
FIG. 20 is a screen shot illustrating an example GUI for composing a new email message including tagged information in a banner.
FIG. 21 is a screen shot illustrating an example GUI for composing a new email message including tagged information in a floating window.
FIG. 22 is a screen shot illustrating an example GUI for an instant messaging conversation including tagged information in a floating window.
FIG. 23 is a screen shot illustrating an example GUI for creating a new calendar appointment including tagged information for one contact in a floating window.
FIG. 24 is a screen shot illustrating an example GUI for creating a new calendar appointment including tagged information for a pair of contacts in a banner.
FIG. 25 is a screen shot illustrating an example GUI for creating a new calendar appointment including filtered tagged information for one contact in a floating window.
FIG. 26 is a screen shot illustrating an example GUI for a list application including tagged information in a banner.
FIG. 27 is flow chart illustrating an example set of computer executable operations that may be performed in making tagged content available in an action associated with one or more contacts.
FIG. 28 is a screen shot illustrating an example GUI for a notes application including an option to modify the list using tagged content associated with a contact related to a list.
FIG. 29 is a screen shot illustrating an example GUI for the notes application of FIG. 28 upon selection of the option to modify the list.
FIG. 30 is a screen shot illustrating an example GUI for the notes application of FIG. 28 upon selection of the option to modify the list.
FIG. 31 is a screen shot illustrating an example GUI for the notes application of FIG. 28 upon selection of the option to modify the list.
FIG. 32 is flow chart illustrating an example set of computer executable operations that may be performed in highlighting list items according to tagged content.
FIG. 33 is flow chart illustrating an example set of computer executable operations that may be performed in reordering list items according to tagged content.
FIG. 34 is flow chart illustrating an example set of computer executable operations that may be performed in removing or editing list items according to tagged content.
FIG. 35 is a block diagram of an example configuration for a mobile device.

### DETAILED DESCRIPTION

It will be appreciated that for simplicity and clarity of illustration, where considered appropriate, reference numerals may be repeated among the figures to indicate corresponding or analogous elements. In addition, numerous specific details are set forth in order to provide a thorough understanding of the example embodiments described herein. However, it will be understood by those of ordinary skill in the art that the example embodiments described herein may be practised without these specific details. In other instances, well-known methods, procedures and components have not been described in detail so as not to obscure the example embodiments described herein. Also, the description is not to be considered as limiting the scope of the example embodiments described herein.

It has been found that users of communications devices, e.g., mobile communication devices, may communicate with various other users using their devices, and during such communications, learn or otherwise discover information that they would like to remember at a later time. However, given the number of ongoing exchanges that may occur and the various media on which the communications are facilitated, it can be difficult for the user to retain this information. For example, a user may learn that a particular friend dislikes a particular type of food or a specific restaurant. However, in a subsequent lunch meeting request, without remembering this information, the user may suggest lunch at a restaurant that is not suitable, given their friend's tastes.

In order to enable information to be stored or saved, the following provides a system and method that enables content in a communication or other application or user interface (Ul) to be tagged such that the content itself or information in that content can be saved for later use. By associating the tagged content with contact profiles for one or more users related to or otherwise associated with such tagged content, the information can be made available to the user during a subsequent action. For example, tagged content from an email, SMS, or IM conversation may be stored with a particular contact's contact profile, and tagged information displayed for the user when attempting to create a new calendar appointment. As will be discussed below, the storage of tagged content and subsequently making tagged information available when performing an action in relation to a contact with which the tagged content was associated, can be performed in various ways, example embodiments of which are illustrated below.

In general, there may be provided a method including: enabling content in a first user interface on a communication device to be selected in the first user interface; enabling selected content to be stored in association with a contact profile for a contact associated with the first user interface; and making at least a portion of the selected content available to a second user interface associated with the contact to enable the at least a portion of the selected content to be used with the second user interface.

There may also be provided a computer readable medium including computer executable instructions for performing the above method. There may also be provided an electronic communication device, such as a mobile device, operable to perform the above method.

Although the principles discussed below are applicable to any electronic communication device, examples will be provided for a mobile communication device, which is one of many types of electronic communication devices.

For clarity in the discussion below, mobile communication devices may be commonly referred to as "mobile devices" for brevity. Examples of applicable mobile devices may include, without limitation, cellular phones, smart-phones, wireless organizers, pagers, personal digital assistants, computers, laptops, handheld or other wireless communication devices, wirelessly enabled notebook computers, portable gaming devices, tablet computers, or any other portable electronic device with processing and communication capabilities.

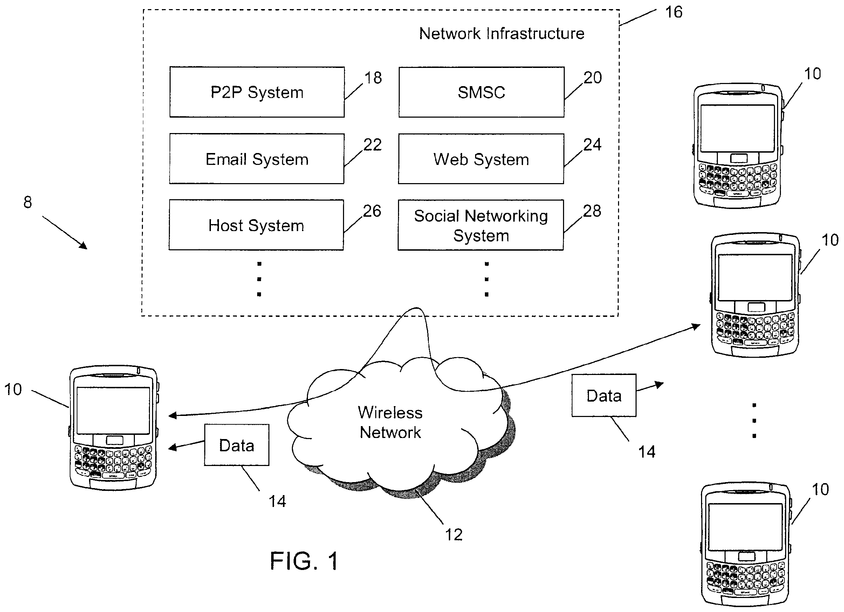

Turning to FIG. 1, an example communication system 8 is shown. The communication system 8, in this example embodiment, enables, at least in part, mobile devices 10 to communicate with each other via a wireless network 12. For example, as shown, data 14 may be exchanged between various mobile devices 10. Data 14 that is sent from one mobile device 10 to another mobile device 10 may be transmitted according to a particular messaging or communication medium, protocol, or other mechanism. For example, as shown in FIG. 1, data 14 may be sent over the wireless network 12 via a component of a network infrastructure 16. It can be appreciated that the network infrastructure 16 shown in FIG. 1 is illustrative only and any component shown within the dashed lines may also or instead be operated by or within another infrastructure or entity. In this example embodiment, the network infrastructure 16 includes various example systems that may be used by the mobile devices 10 to exchange data 14. The not exhaustive list of examples shown in FIG. 1 includes a peer-to-peer (P2P) system 18, a short message service centre (SMSC), an email system 22 (e.g. web-based, enterprise based, or otherwise), a web system 24 (e.g. hosting a website or web service), a host system 26 (e.g. enterprise server), and social networking system 28.

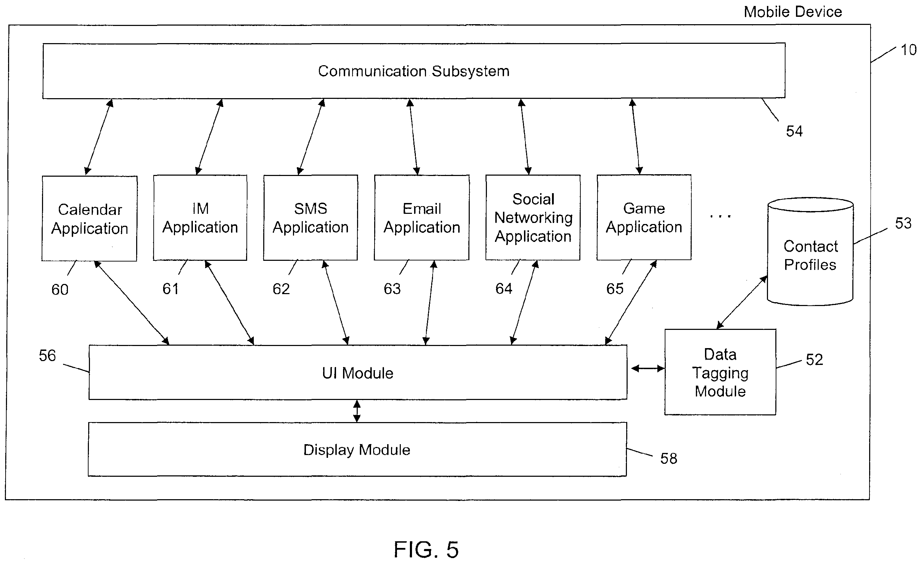

The mobile devices 10 may therefore send data to or receive data from other mobile devices 10 via one of the example systems with which the mobile devices 10 are communicable via the wireless network 12 and network infrastructure 16. A mobile device 10 and its corresponding user(s) may be designated by another mobile device 10 as a contact. As will be discussed in greater detail below, mobile devices 10 may store information associated with various contacts in order to facilitate communicating with that contact via at least one medium. For example, a contact may be reachable via email, instant messaging (IM), SMS, and a social networking application. A contact profile 53 (see also FIG. 5) can be stored for that contact to enable the mobile device 10 to conveniently communicate with the contact over a desired medium without having to necessarily enter contact information (e.g. addresses) each and every time. In addition to information enabling the mobile device 10 to communicate with the contact, a contact profile 53 can include additional information and data such as an avatar, physical (mailing) address, personal information, professional information, etc. As discussed above, it has been found that by enabling a contact profile 53 (or equivalent repository of information associated with a contact) to store information, tagged or otherwise selected and saved, by a user, such "tagged" information can be made available to the user for subsequent use, e.g. to provide context or helpful information regarding that contact when performing a task or operation associated with that contact.

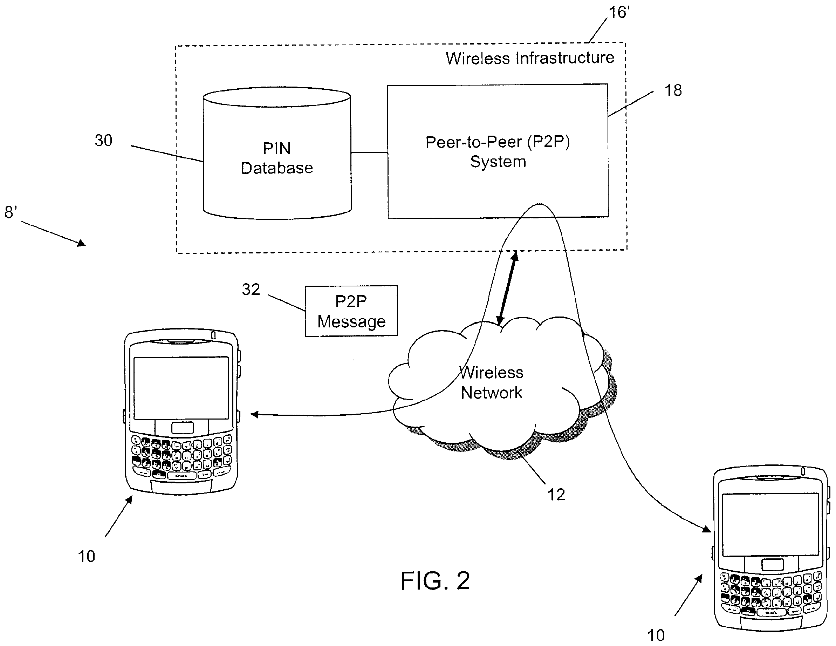

An example embodiment of a communication system 8' including a wireless infrastructure 16', is shown in FIG. 2. The communication system 8' at least in part, enables mobile devices 10 to communicate via a P2P system 18 over the wireless network 12. It will be appreciated that the two mobile devices 10 shown in FIG. 1 are for illustrative purposes only and many other mobile devices 10 (not shown) may also be capable of communicating with or within the communication system 8'. It will also be appreciated that although the examples shown herein are directed to mobile communication devices, the same principles may apply to other devices capable of communicating with the P2P system 18. For example, an application (not shown) hosted by a desktop computer or other "non-portable" or "non-mobile" device may also be capable of communicating with other devices (e.g. including mobile devices 10) using the P2P system 18.

The P2P system 18 is, in this example embodiment, a component of the wireless infrastructure 16' associated with the wireless network 12. The wireless infrastructure 16' in this example includes, in addition to the P2P system 18, and among other things not shown for simplicity, a person identification number (PIN) database 30. The PIN database 30 in this example embodiment is used to store one or more PINs associated with particular mobile devices 10, whether they are subscribers to a service provided by the wireless infrastructure 16' or otherwise.

One of the mobile devices 10 may communicate with the other of the mobile devices 10 and vice versa via the P2P system 18, in order to perform P2P messaging or to otherwise exchange P2P-based communications. For ease of explanation, in the following example embodiments, any P2P-based communication may also be referred to as a P2P message 32 as shown in FIG. 2.

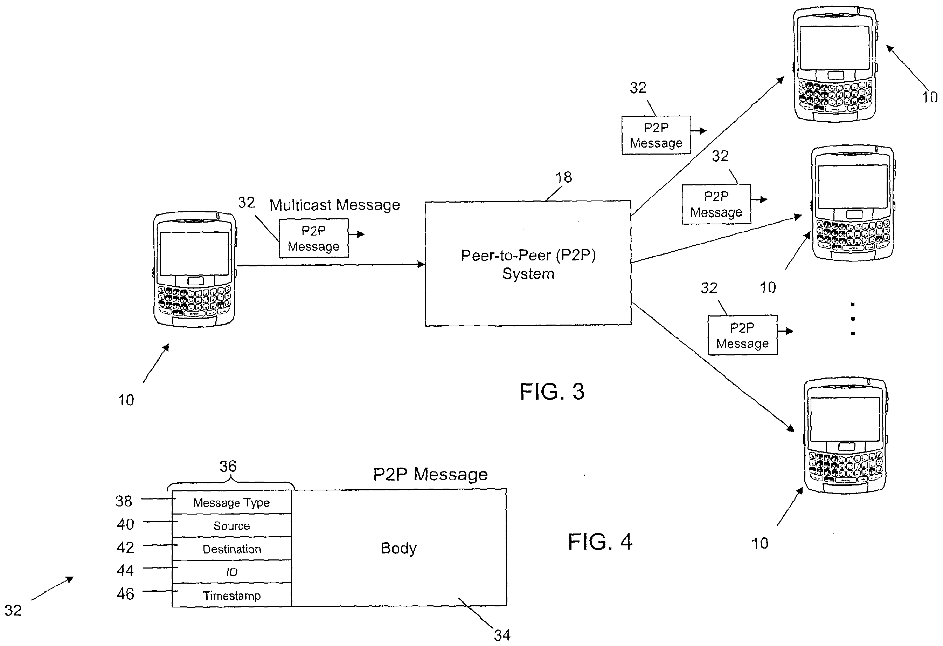

In some example embodiments, the P2P system 18 may be capable of sending multi-cast messages, i.e. forwarding a single message from a sender to multiple recipients without requiring multiple messages 32 to be generated by such sender. For example, as shown in FIG. 3, the P2P system 18 can be operable to enable a single P2P message 32 to be sent to multiple recipients by addressing the P2P message 32 to multiple corresponding P2P addresses, and having the P2P system 18 multicast the message 32 to those recipients.

An example embodiment of a P2P message 32 is shown in greater detail in FIG. 4, and has a format that is particularly suitable for a PIN-to-PIN based system. In a typical P2P protocol, each P2P message 32 has associated therewith a source corresponding to the mobile device 10 which has sent the P2P message 32 and includes a destination identifying the one or more intended recipients. Each P2P message 32 in this example includes a body 34, which contains the content for the P2P message 32 (e.g. text or other data), and a header 36, which contains various fields used for transmitting and processing each P2P message 32. In this example, the header 36 includes a message type field 38 to specify the type of transmission (e.g. chat, registration, block, presence, etc.), a source field 40 to specify the device address for the sender, a destination field 42 to specify the device address(es) for the one or more intended recipients, an ID field 44 to identify the corresponding P2P application (e.g., see IM application 61 in FIG. 5) and a timestamp field 46 to indicate the time (and if desired, the date) at which the P2P message 32 was sent by the designated sender.

It can be appreciated that in this example, the ID field 44 can be used to specify the application ID to identify a P2P application on the mobile device 10. Where the P2P application relates to, for example, an instant messaging (IM) system, the message type field 38 can also be used to designate an IM communication, and the ID field 44 would then correspond to a conversation ID, i.e. a conversation thread the message 32 corresponds to (e.g. such that each message 32 is identified by the conversation in which it was sent).

It will be appreciated that other information or attributes may be included in the P2P message 32, such as a subject field (not shown) to enable a subject for part or all of a conversation (in an IM embodiment) to be transported with the P2P message 32 (e.g. to create new subjects, modify subjects, notify others of subjects, etc.), or application details field (not shown) to provide application-specific information such as the version and capabilities of the application.

The P2P system 18 can utilize any suitable P2P protocol operated by, for example, a P2P router (not shown), which may be part of the wireless infrastructure 16'. It can be appreciated however that a stand-alone P2P configuration (i.e. that does not rely on the wireless infrastructure 16' - not shown) may equally apply the principles herein. The P2P system 18 may also enable mobile devices 10 to communicate with desktop computers thus facilitating, for example, communications such as instant messaging (IM) between mobile applications and desktop applications on the desktop computer.

The P2P system 18 can be implemented using a router-based communication infrastructure, such as one that provides email, SMS, voice, Internet and other communications. Particularly suitable for hosting a P2P messaging router, is a wireless router or server used in systems such as those that provide push-based communication services. In FIG. 2, the wireless infrastructure 16' facilitates P2P communications such as instant messaging between mobile devices 10. P2P messaging, such as IMing, is provided by an associated application stored on each mobile device 10, e.g. an IM application 61 as shown in FIG. 5, which can be initiated, for example, by highlighting and selecting an icon from a display as is well known in the art. The P2P system 18 routes messages between the mobile devices 10 according to the P2P protocol being used. For example, the P2P protocol may define a particular way in which to conduct IM or other types of messaging.

In general, in a P2P protocol, the sender of the P2P message 32 knows the source address of the intended recipient, e.g. a PIN. This may be established when the two devices request to add each other to their respective contact or buddy lists. A particular mobile device 10 can communicate directly with various other mobile devices 10 through the P2P system 18 as without requiring a dedicated server for facilitating communications. In other words, the P2P system 18 enables the mobile devices 10 to communicate with each other directly over the wireless infrastructure 16' in accordance with the P2P protocol.

When conducting a P2P session according to the example embodiment shown in FIG. 2, the mobile devices 10 can communicate directly with the wireless infrastructure 16' in a client based exchange where, as noted above, an intermediate server is not required. A P2P message 32 sent by one mobile device 10 is received by the wireless infrastructure 16', which obtains the source address for the intended recipient (or recipients) from information associated with the message 32 (e.g. a data log) or from the message 32 itself. Upon obtaining the recipient's address according to the P2P protocol, the wireless infrastructure 16' then routes the message 32 to the recipient associated with the mobile device 10 having such address (or recipients having respective addresses). The wireless infrastructure 16' typically also provides a delivery confirmation to the original sender, which may or may not be displayed to the user. The destination device can also provide such delivery information. The wireless infrastructure 16' may be capable of routing P2P messages 32 reliably as well as being capable of holding onto the P2P messages 32 until they are successfully delivered. Alternatively, if delivery cannot be made after a certain timeout period, the wireless infrastructure 16' may provide a response indicating a failed delivery. The wireless infrastructure 16' may choose to expire a message 32 if a certain waiting period lapses.

Turning now to FIG. 5, an example configuration for a mobile device 10 is shown. In this example embodiment, a communication subsystem 54 is provided in order to enable the mobile device 10 to access communication networks such as the wireless network 12 shown in FIGS. 1 and 2. Various applications are illustrated in FIG. 5, and such applications may be operable on the mobile device 10 to access the communication subsystem 54 in order to participate in sending and/or receiving of data 14, such as in a data communication. It can be appreciated that the example applications shown in FIG. 5 are for illustrative purposes only and should not be considered exhaustive. The example applications shown in FIG. 5 include a calendar application 60, an IM application 61, an SMS application 62, an email application 63, a social networking application 64, and a game application 65. The applications 60-65 may also access a UI module 56 for providing UI data on a display of the mobile device 10 using a display module 58.

When using an application, the user may encounter content which includes information that they deem to be important or otherwise desirable to know or remember with respect to a particular contact. For example, during an IM conversation, the user may discover that the contact with which they are communicating likes or dislikes something, or has a particular habit. This additional or auxiliary information that can be ascertained from the content may be useful in a subsequent action, event, or communication, and thus the user may wish to capture a record of this information or content. By associating the additional information with the contact, when performing an action associated with that contact, such as when preparing a new communication, creating a new meeting invite, sending a game invite, generating a group list or sharing data or content; the user can reference the additional information pertaining to the contact for consideration with respect to the action. For example, if the additional information indicates that the contact dislikes a particular type of food, the user can recommend meeting for lunch at a restaurant that does not serve or focus on that type of food.

In the example embodiment shown in FIG. 5, a data tagging module 52 is provided, which can be used to determine, obtain, and store such additional information, or content including the information, in a data store of contact profiles 53, in association with a particular one or more contacts. It can be appreciated that the data tagging module 52 can be operable to enable one or more of a manual selection or "tagging" of content by the user (which may include relevant information or other data); and an automatic tagging operation (e.g., by comparing content with a database or keywords and/or phrases). It can also be appreciated that tagged content can be associated with any one or more contacts. For example, Contact A may mention in a communication that: "me and Contact B like X". In such cases, in addition to tagging content with respect to Contact A, the data tagging module 52 can enable this information to also be tagged for Contact B. In this way, the data tagging module 52 can enable any information to be captured and associated with any number of contacts, to accommodate various scenarios and various degrees of relevance for that information to such contacts.

It may also be appreciated that the data tagging module 52 may also be operable to obtain the additional information from the applications 60-65 themselves and/or from other sources on or available to the mobile device 10 and should not be limited to obtaining only Ul-based information.

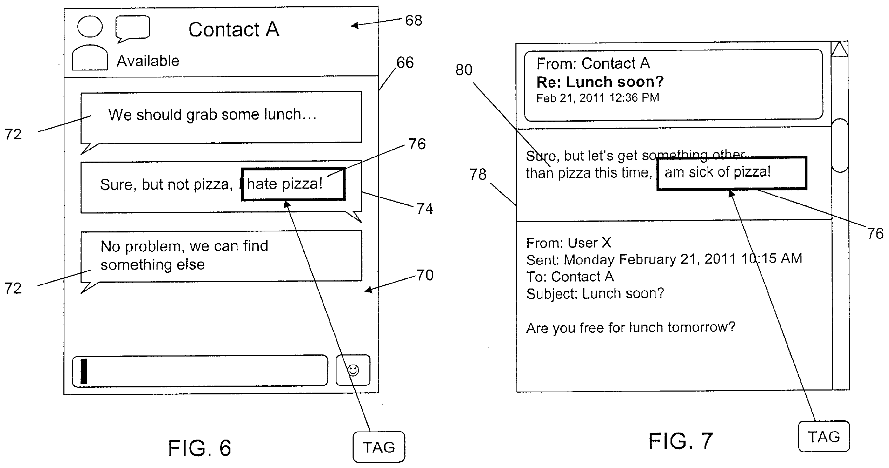

FIGS. 6 through 13 illustrate various example embodiments in which content 76 from a communication, application, or UI is tagged in order to capture or otherwise make note of, the content 76 itself, or at least a portion of information included in the content 76. FIG. 6 illustrates an example embodiment Ul for an IM application with an IM conversation screen 66 having a banner portion 68 indicating an ongoing conversation with Contact A, and a conversation history portion 70. The conversation history portion 70, in this example embodiment, includes a pair of outgoing messages 72 and an incoming message 74 from Contact A. Content 76 in the incoming message 74 shown in FIG. 6 is being tagged, which includes the text: "I hate pizza". It is assumed in this example embodiment that the user wishes to make a note or otherwise remember this information, and by tagging the content 76 shown in FIG. 6, they may be able to later recall that Contact A does not like pizza, e.g., when the user next plans to go for lunch or dinner with Contact A.

FIG. 7 illustrates an example embodiment UI for an email application, in which similar content 76 is tagged from an email message UI 78. In this example embodiment, a reply portion 80 of the email message UI 78 includes the text: "I am sick of pizza". Similar to the example embodiment shown in FIG. 7, it is assumed in this example embodiment that the user wishes to make a note or otherwise remember this information, and by tagging the content 76 shown in FIG. 7, they may be able to later recall that Contact A is tired of having pizza, e.g., when the user next plans to go for lunch or dinner with Contact A.

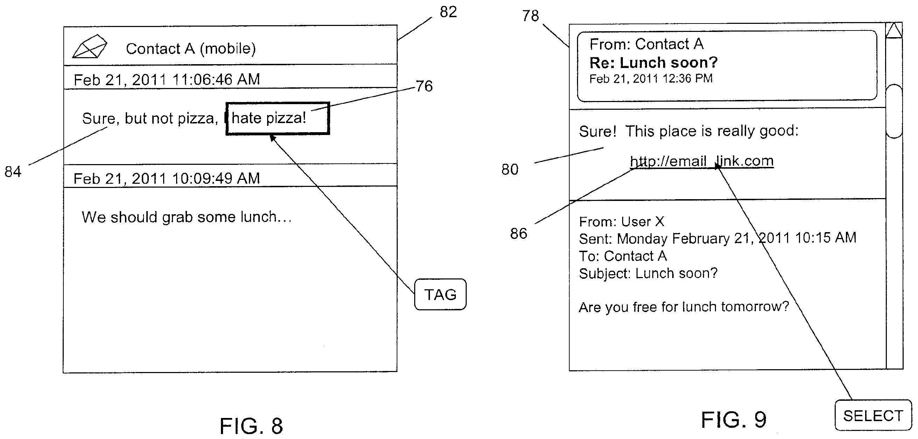

FIG. 8 illustrates an example embodiment UI for an SMS application, in which content 76 from a reply portion 84 of an SMS exchange UI 82 is tagged to also associate a lack of desire to have pizza, with a contact profile 53 associated with Contact A.

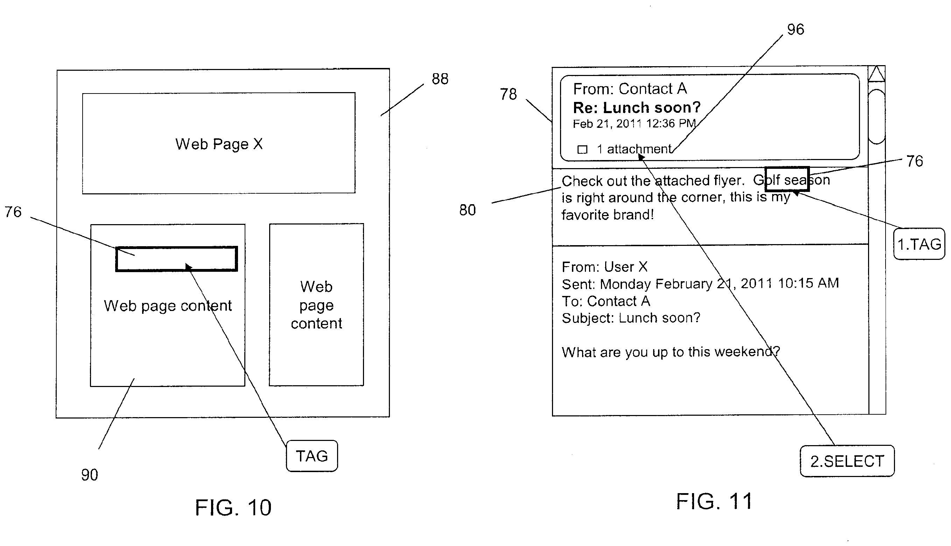

FIG. 9 illustrates an example embodiment UI for an email application, in which an email communication UI 78 embeds or otherwise includes a link 86 in the reply portion 80. Instead of the desired content 76 being available directly from within the email communication UI 78, in this example embodiment, the content 76 tagged by the user is found in web page content 90 of a web page 88 as shown in the example embodiment UI for a web browser application in FIG. 10, accessed by selecting the link 86 from the email communication UI 78 shown in FIG. 9. It can be appreciated that tagging content made available by selecting a link 86 can apply to any form of communication or other UI associated with a particular contact. For example, a similar link may be provided via an IM exchange, SMS exchange, etc.

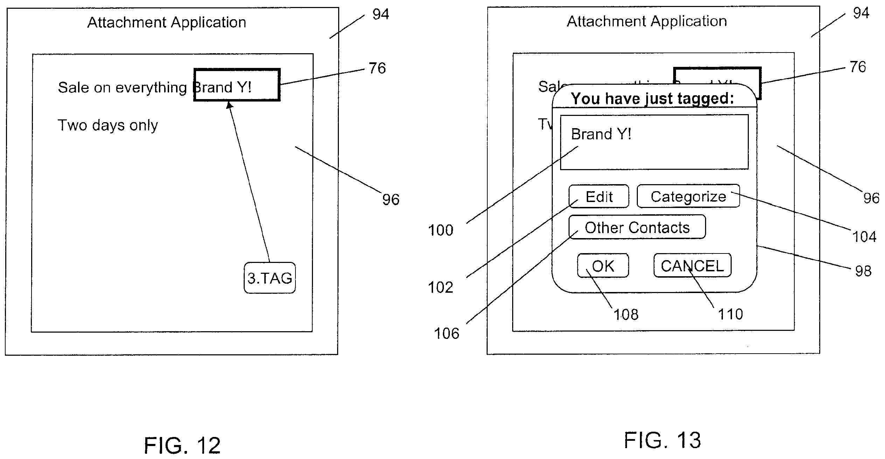

FIG. 11 illustrates another example embodiment UI for an email application, wherein content 76 is tagged both within an email communication UI 78, and from an attachment 96 sent with the email communication and available from the email communication UI 78. In this example embodiment, it can be seen that content 76 pertaining to golf can be tagged in the reply portion 80, as well as content 76 related to a specific Brand Y included in a flyer or other advertisement 96 attached to the email sent by Contact A, and displayed in an attachment application 94 (e.g., PDF viewer) as shown in FIG. 12.

It can be appreciated that content 76 tagged from a particular Ul can be stored or otherwise saved for later use in various ways. For example, the content 76 may be stored unedited, and in its native format, in association with the contact's profile 53.

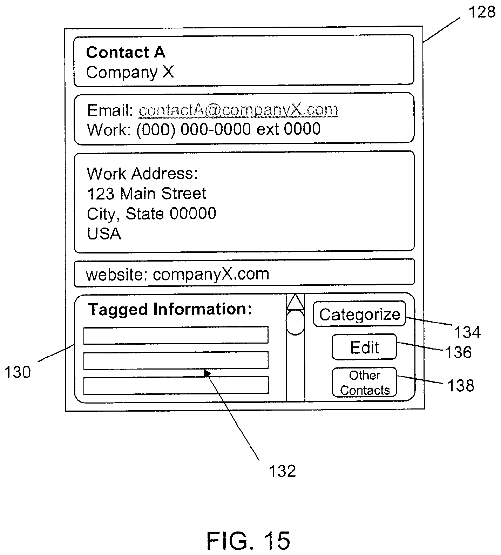

In another example embodiment, as shown in FIG. 13, a prompt 98 may be displayed after the content 76 is tagged. In this example embodiment, the prompt 98 includes a tagged content field 100 that includes a representation of the tagged content 76. To further organize and refine the content 76, the prompt 98 may also be configured to enable the content 76 itself to be edited by selecting an edit button 102, categorized by selecting a categorize button 104, or applied to a plurality of contact profiles 53 by selecting an other contacts button 106. It can be appreciated that in addition to, or rather than enable such modifications at the time of being prompted as shown in FIG. 13, any such modifications or refinements to the content 76 can be made via various other mechanisms, for example, via a contacts profile UI 128, discussed in greater detail below (see also FIGS. 15 through 18).

In this example embodiment, whether or not any such modifications are made, the user may confirm storage of the tagged content 76 by selecting an OK button 108, or cancel the tagging operation by selecting a CANCEL button 110.

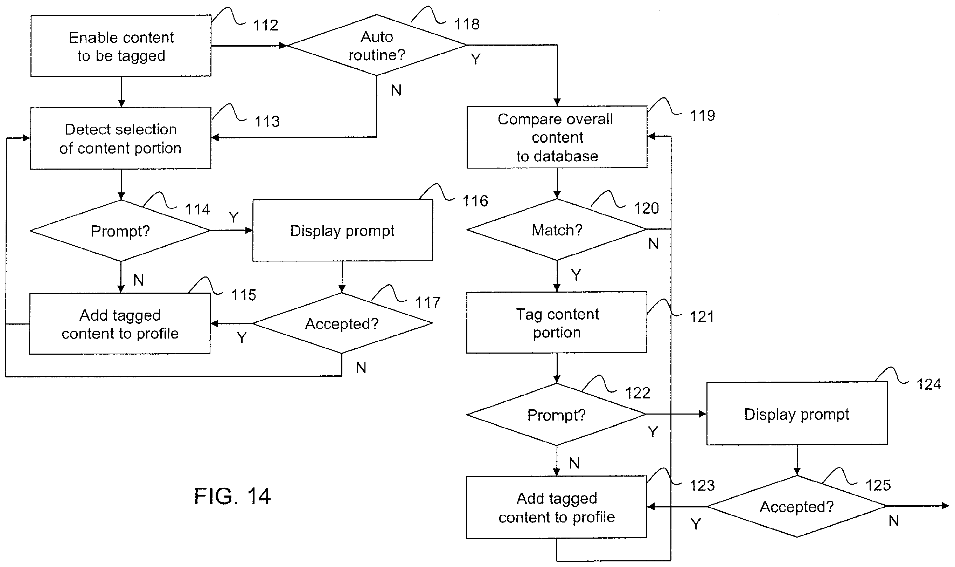

FIG. 14 illustrates an example set of computer executable operations that may be performed in enabling content 76 provided by or otherwise accessible on a mobile device 10, to be associated with a contact profile 53 for each of one or more contacts. At 112, the mobile device 10 enables content 76 to be tagged. This may be accomplished in various ways, such as by providing a menu option (not shown), an embedded applet or other selection mechanism within a particular application UI (not shown), etc. For example, after detecting selection of a portion of content 76, e.g., via a stylus, finger swipe, scroll or tracking movement, etc., an application UI may enable a menu having such an option to be invoked, a short-cut key to be selected or any other suitable input enabling the user to confirm selection of a desired portion of content 76 (e.g. as shown in the example embodiments illustrated in FIGS. 6 through 13). In the example set of operations shown in FIG. 14, the ability to both manually tag content 76 (via detection of such inputs), and automatically tag content 76 (e.g. by detecting content 76 according to predetermined data or criteria) is provided. It can be appreciated that in some example embodiments, either manual or automatic tagging may be provided.

By enabling content 76 to be tagged manually, selection of a portion of content 76 may be detected at 113. It may then be determined at 114, whether or not a prompt 98 is to be provided (e.g. as shown in FIG. 13). If a prompt is not to be provided, the tagged content 76 is added at 115, to the contact profile 53 for a contact associated with the communication or other UI from which the content 76 is tagged, and operation then returns to 113. If a prompt is to be provided, the prompt is displayed at 116, and it is then determined at 117, whether or not the tagged content 76 is accepted (e.g. by detecting selection of the OK button 108. If the tagged content 76 is not accepted at 117, operation returns to 113. If the tagged content 76, provided via a prompt 98, is accepted at 117, the tagged content 76 is added at 115, to the contact profile 53 for a contact associated with the communication or other UI from which the content 76 is tagged, and operation then returns to 113.

By enabling content to be automatically tagged, the data tagging module 52, for example, can be used to detect content of interest from a particular communication or other UI that can be associated with one or more contacts. For example, the data tagging module 52 may include a list or database of keywords, key phrases, or other data that can be correlated to content in the communication or other UI. If any of the keywords, key phrases or other data are detected in a particular communication or other UI, the data tagging module 52 can automatically identify a portion of tagged content 76, and enable such content 76 to be stored in association with one or more contact profiles 53. For example, by storing a list of keywords such as: like, hate, love, do not like, etc., a portion of content following such a keywords can be captured automatically. In the example embodiment shown in FIGS. 6 to 8, the data tagging module 52 could detect "hate" (as in FIGS. 6 and 8), or "sick of (as in FIG. 7), and store one or more words following "hate" or "sick of to thereby capture potentially desirable content 76. It can be appreciated that this is only one example and that various other analytics, algorithms, and methods may be employed in order to automatically detect content 76 from a communication or other UI.

Turning back to FIG. 14, in this example embodiment, if it is determined at 118 that content 76 may be captured automatically, the overall content of a particular communication or other UI (e.g. readable text, images, etc.) is compared to a database at 119. If no matches with what is included in the database can be found at 120, the data tagging module 52 may continue comparing the overall content of the same or further communications or Uls until a match is found. If a match is found at 120, a portion of content 76 is tagged at 121. Subsequent to tagging the portion of content 76 at 121, the data tagging module 52 may determine at 122, whether or not a prompt 98 is to be provided (e.g. as shown in FIG. 13). If a prompt is not to be provided, the tagged content 76 is added at 123, to the contact profile 53 for a contact associated with the communication or other UI from which the content 76 is tagged. If a prompt is to be provided, the prompt is displayed at 124, and it is then determined at 125, whether or not the tagged content 76 is accepted (e.g. by detecting selection of the OK button 108). If the tagged content 76 is not accepted at 125, operation returns to 119. If the tagged content 76, provided via a prompt 98, is accepted at 125, the tagged content 76 is added at 123, to the contact profile 53 for a contact associated with the communication or other UI from which the content 76 is tagged, and operation then returns to 119.

The tagged content 76, once captured or otherwise obtained, may then be associated with one or more contact profiles 52. FIG. 15 illustrates an example contact profile UI 128 for Contact A which, among other things, includes a tagged information portion 130. In this example embodiment, the tagged information portion 130 includes a list of tagged content portions 132. In addition to the tagged content portions 132, the contact profiled UI 128 may also enable the content portions 132 themselves to be edited by selecting an edit button 136, categorized by selecting a categorize button 134, or applied to a plurality of contact profiles 53 by selecting an other contacts button 138. It can be appreciated that the tagged information portion 130 may present the tagged content portions 132 in various ways and that a listing as shown in FIG. 15 is for illustrative purposes only. For example, the tagged information portion 130 may list a number of content categories, which can be selected to "drill down" into relevant tagged content 76.

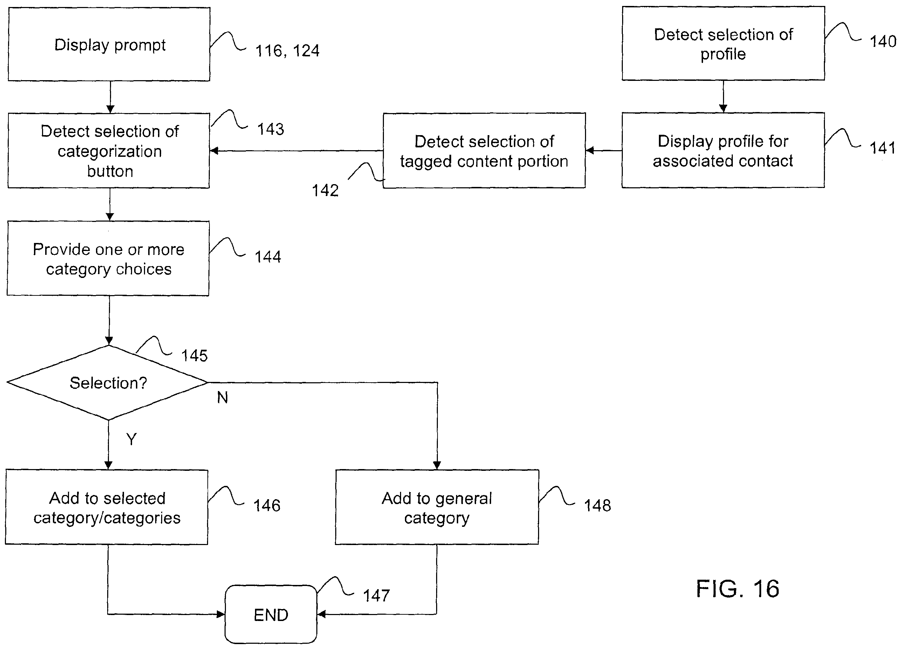

Turning now to FIG. 16, an example set of computer executable operations for enabling categorization of tagged content 76 is shown. In this example embodiment, categorization may be effected either at the time the content 76 is tagged (e.g. via a prompt 98 as shown in FIG. 13), or subsequently (e.g. via the contact profile UI 128 shown in FIG. 15). At 116 or 124, the prompt 98 is displayed (e.g. as shown in FIGS. 13 and 14), which includes the categorization button 104. At 140, selection of a contact profile 53 is detected and the profile for the associated contact displayed at 141. Selection of, for example, a content portion 132 may then be detected at 142. Whether provided via the prompt 98 or the contact profile UI 128, selection of the categorization button 104, 134 may then be detected at 143. In this example embodiment, one or more category choices may then be provided at 144, to enable the user to categorize the selected tagged content 76. It may then be determined at 145 whether or not a particular category choice has been selected. For example, a list of category choices may be presented (or the ability to create a new category) may be provided along with an option to bypass categorization (e.g. if none of the categories are suitable). If selection of a particular category is not made at 145, the tagged content 76 may be added to a general category at 148. If selection of a particular one or more categories is detected at 145, the tagged content 76 may be added to the selected (or created) one or more categories at 146. The process may then end at 147.

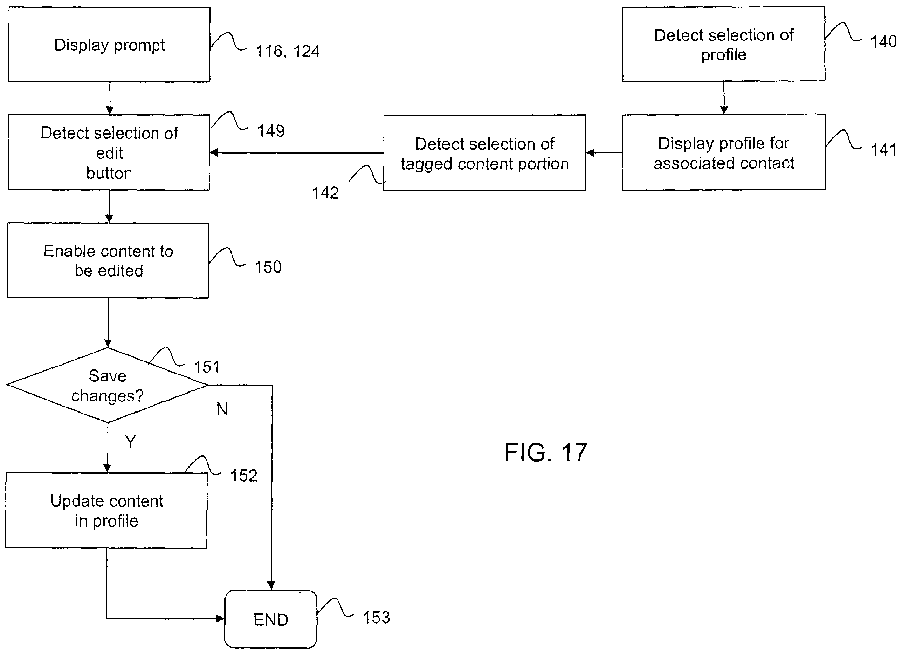

Turning now to FIG. 17, an example set of computer executable operations for enabling tagged content 76 to be edited, is shown. In this example embodiment, editing may be effected either at the time the content 76 is tagged (e.g. via a prompt 98 as shown in FIG. 13), or subsequently (e.g. via the contact profile UI 128 shown in FIG. 15). At 116 or 124, the prompt 98 is displayed (e.g. as shown in FIGS. 13 and 14), which includes the edit button 102. At 140, selection of a contact profile 53 is detected and the profile for the associated contact displayed at 141. Selection of, for example, a content portion 132, may then be detected at 142. Whether provided via the prompt 98 or the contact profile UI 128, selection of the edit button 102, 136 may then be detected at 149. The ability to edit the content 76 may then be provided at 150, e.g. by enabling a user to access and edit text in the tagged content field 100 shown in FIG. 13. It can be appreciated that any suitable mechanism for editing the tagged content 76 may be used, e.g., by providing a separate editing screen (not shown), enabling the tagged content 76 as displayed to be edited directly, etc. In this example embodiment, it is then determined at 151 whether or not any edits made have been accepted to be saved. For example, options to accept or cancel edits made to the content 76 may be provided. If the edits are not accepted, the process ends at 153. If one or more edits made to the tagged content 76 are accepted by the user at 151, the content 76 is stored in the one or more contact profiles 53 is updated at 152.

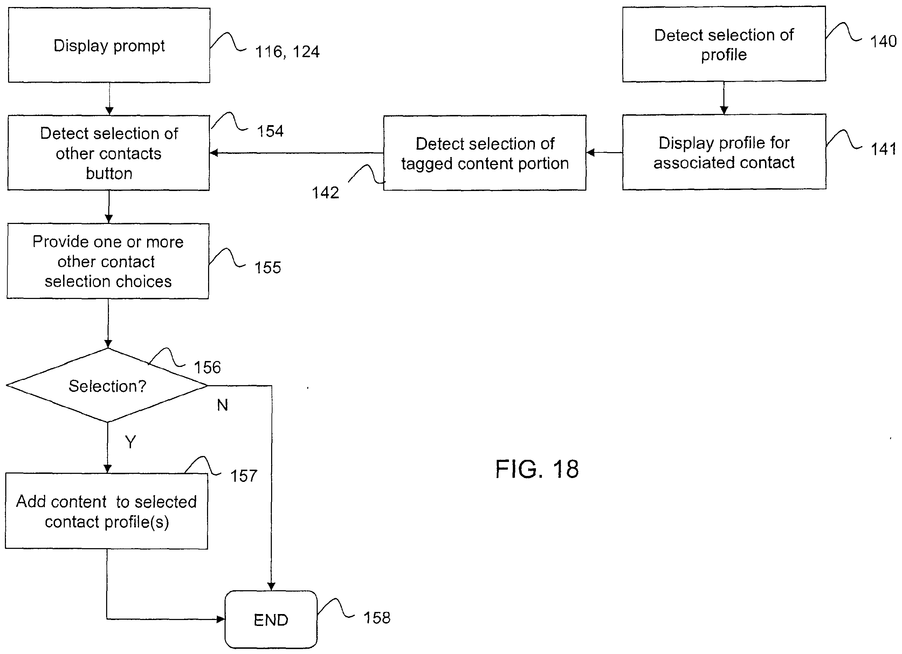

FIG. 18 illustrates an example set of computer executable operations for enabling tagged content 76 to be provided to one or more additional contact profiles 53. In this example embodiment, provided tagged content 76 from a communication or UI associated with one contact, may be provided to contact profiles 53 for other contacts, either at the time the content 76 is tagged (e.g. via a prompt 98 as shown in FIG. 13), or subsequently (e.g. via the contact profile UI 128 shown in FIG. 15). At 116 or 124, the prompt 98 is displayed (e.g. as shown in FIGS. 13 and 14), which includes the other contacts button 106. At 140, selection of a contact profile 53 is detected and the profile for the associated contact displayed at 141. Selection of, for example, a content portion 132, may then be detected at 142. Whether provided via the prompt 98 or the contact profile UI 128, selection of the other contacts button 106, 138 may then be detected at 154. The ability to provide the content 76 to one or more other contact profiles 53 may then be provided at 155, e.g. by providing a list of selectable options associated with other contacts. It can be appreciated that any suitable mechanism for selecting other contacts may be used, e.g., by providing a separate screen (not shown), pop-up window, auto-complete list, etc. In this example embodiment, it is then determined at 156 whether or not any other contacts have been selected. For example, options to accept or cancel the selection operation may be provided. If no selections are not accepted, the process ends at 158. If one or more selections are made and accepted by the user at 156, the content 76 is provided to one or more associated contact profiles 53 at 157.

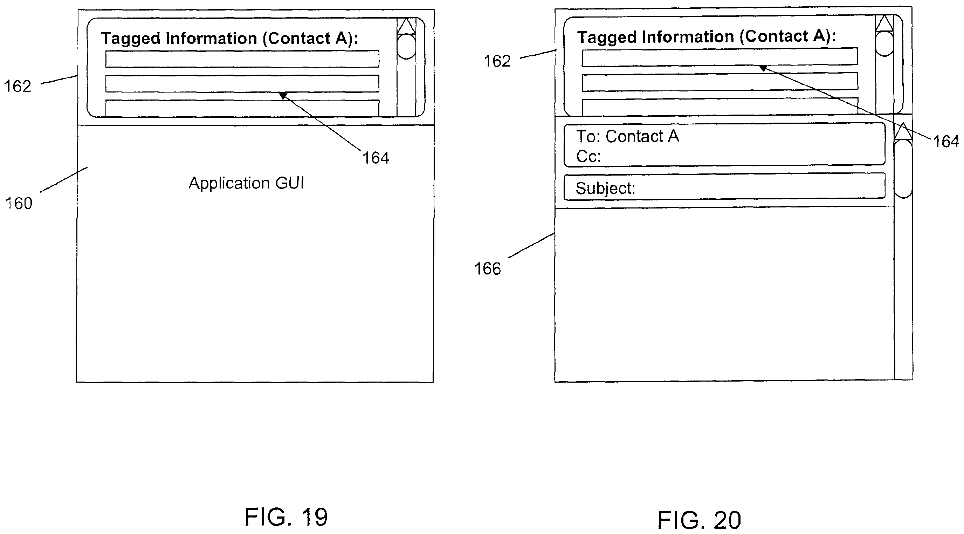

As discussed above, by enabling a contact profile 53 (or equivalent repository of information associated with a contact) to store information tagged or otherwise selected and saved by a user (e.g. as illustrated by way of example in FIGS. 6 through 18), such tagged content 76, or information from such tagged content 76, can be made available to the user for subsequent use, e.g. to provide context or helpful information regarding that contact when performing a task or operation associated with that contact. FIGS. 19 through 26 illustrate various example embodiments wherein tagged content 76 is made available during use of an application having an association with a particular content for which tagged content 76 is available.

FIG. 19 illustrates a generic application GUI 160, which shares a screen with or otherwise includes or accommodates a separate portion such as a banner 162. In this example embodiment, the banner 162 includes tagged information 164 (e.g. the tagged content 76 itself or information from within or derived from the tagged content 76) that has been stored in a contact profile 53 (or other repository) for Contact A. In this way, the tagged information 164 is provided while the application GUI 160 is being used, in order to provide convenient access to previously tagged content 76 associated with a contact that can also be associated with the application.

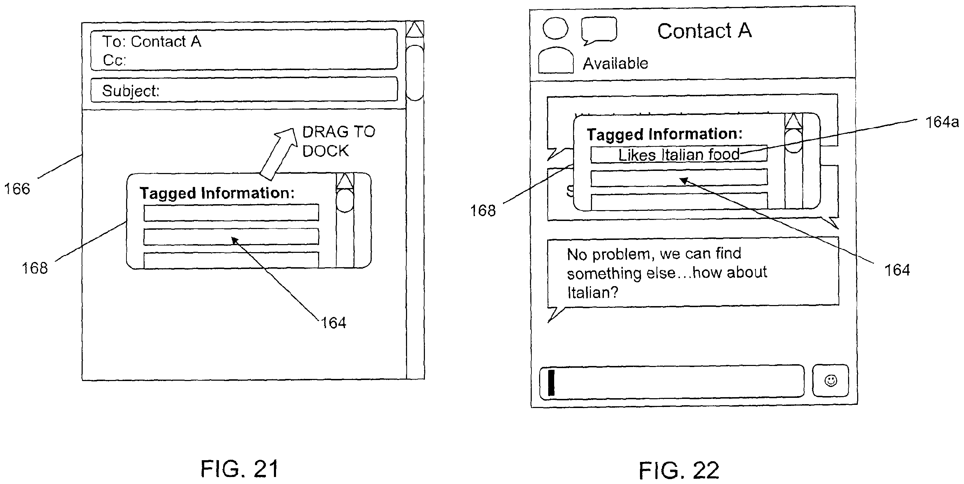

FIG. 20 illustrates an example embodiment wherein a banner 162 with tagged information 164 is displayed during composition of a new email message using an email UI 166. FIG. 21 illustrates an example embodiment UI for an email application, wherein a floating window 168 with tagged information 164 is displayed during composition of the new email message using the email UI 166. As shown in FIG. 21, it can be appreciated that a floating window 168 can be docked to provide a banner 162 as shown in FIG. 19, e.g., by dragging the floating window 168 towards an edge of the screen.

FIG. 22 illustrates an example embodiment UI for an IM application, wherein the floating window 168 is displayed with tagged information 164 during an ongoing IM conversation. In the example embodiment shown in FIG. 22, an example tagged content item 164a is shown, namely "Likes Italian food", which, in this example embodiment, is used to suggest that the user and Contact A meet for Italian food. It can be appreciated that the tagged information 164 can be organized, filtered, and displayed in any suitable manner.

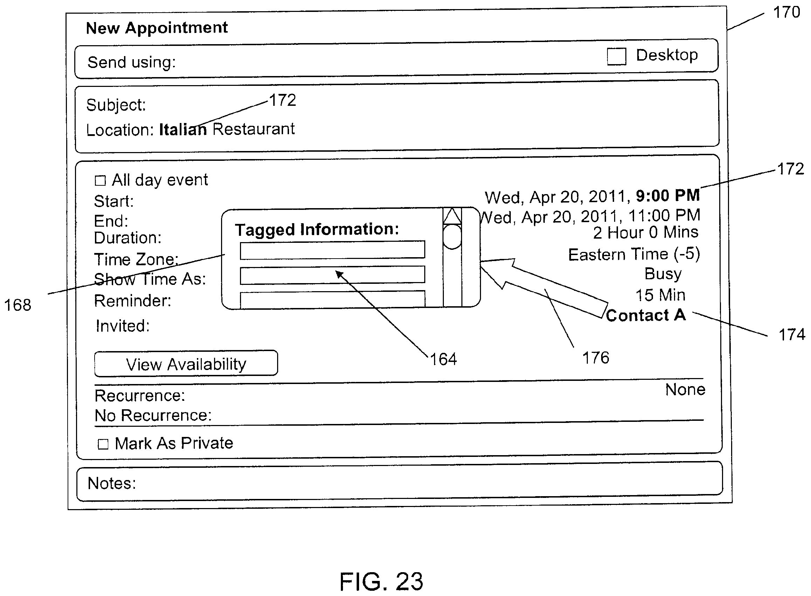

FIG. 23 illustrates another example embodiment UI for a calendar application, wherein a floating window 168 including tagged information 164 is displayed during composition of a new calendar appointment using a calendar appointment UI 170. In this example embodiment, it can be seen that in addition to providing the tagged information 164 via the floating window 168, the associated contact 174, namely Contact A in this example embodiment, can be highlighted and an arrow 176 or other emphasis drawing element displayed to provide a further visual connection between the tagged information 164 and the contact with which the application being used is associated. In addition to the associated contact 174, if applicable, relevant content 172 within the application GUI 160 can also be highlighted. Highlighting such relevant content 172 can be particularly helpful to the user when the tagged information 164 is organized or filtered according to such relevant content 172 to draw further emphasis to potentially helpful or important information regarding the contact with which the application being used is associated.

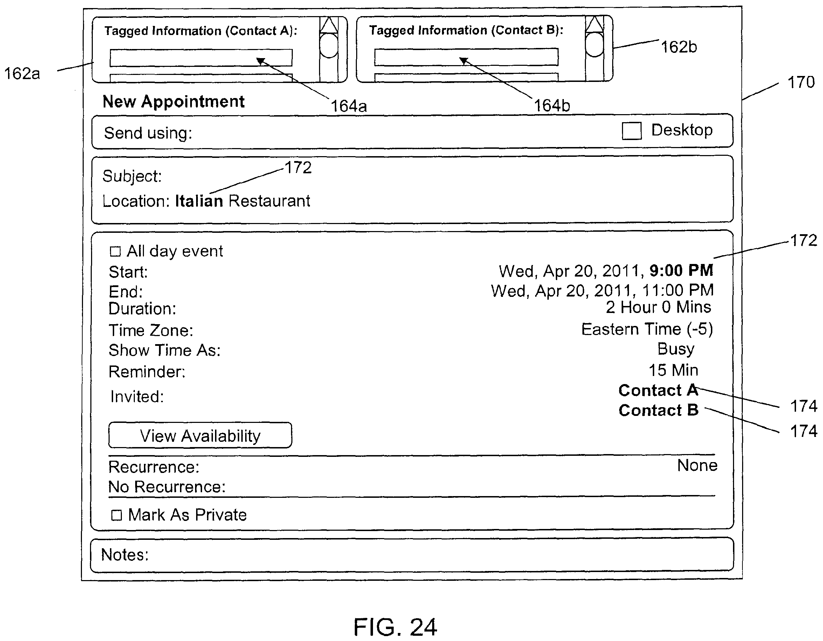

FIG. 24 illustrates another example embodiment UI for a calendar application, including the provision of first and second tagged information portals 162a, 162b, including corresponding tagged information 164a, 164b for respective contacts associated with the application GUI 160, in this example, the new calendar appointment UI 170. As illustrated in FIG. 24, relevant content 172, and the associated contacts 174 can also be highlighted. It can be appreciated that the portals 162a, 162b are shown in docked positions for illustrative purposes only and could also be dragged away from the upper edge such that they become floating windows (not shown).

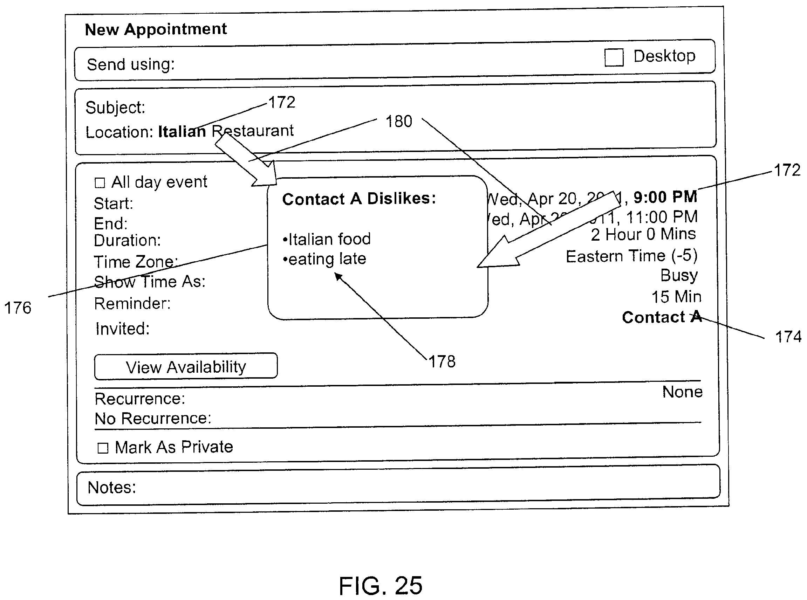

FIG. 25 illustrates another example embodiment UI for a calendar application, in which a filtered set of tagged information 178 is displayed in a floating window 176. Arrows 180 are also provided to draw the user's attention towards the relevant content 172 and associated contact 174, which has influenced the filtering of the tagged information 178 in this example embodiment. It can therefore be appreciated that any suitable visual cues or emphasizing items, icons, or mechanisms can be used to correlate and visually depict associations between content in the application GUI 160, tagged content 76 stored in a contact profile 53, and the contact themselves, whether static or animated. Further notifications or non-visual cues such as tones, beeps, etc. can also be used.

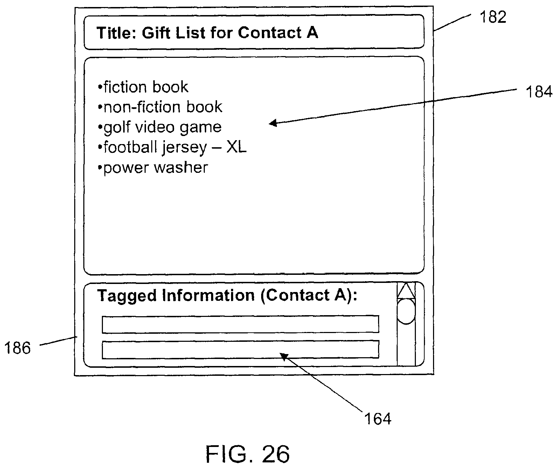

FIG. 26 illustrates another example embodiment UI for a notes application wherein the application GUI 160 associated with the particular contact, is independent of any form of communication. In this example embodiment, a notes application UI 182 indicates that a list being prepared is associated with Contact A and thus displays a tagged information portion 186 including tagged information 164 on the same screen as a list of items 184. It can be appreciated that the association with Contact A could be made in various other ways, such as by associating a group or organization with contacts associated with that group or organization, etc. By providing the tagged information portion 186 as shown in FIG. 26, the tagged content 76 associated with Contact A can be made available to the user to assist in creating such a list of items 184. In this example embodiment, Contact A's likes and dislikes, for example, may be useful in creating a gift list.

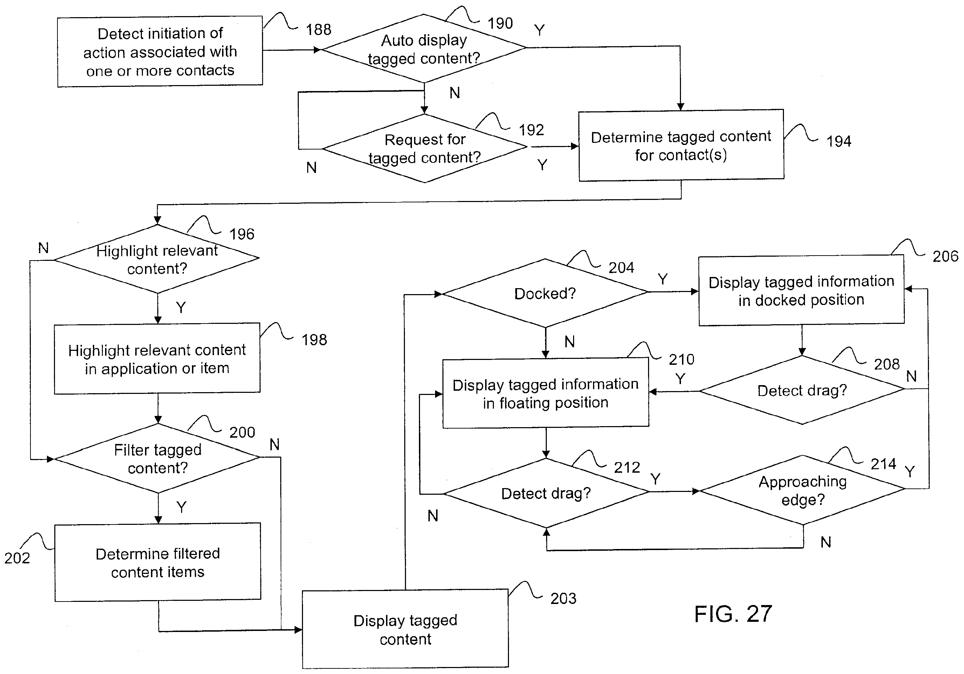

Turning now to FIG. 27, an example set of computer executable instructions is shown for enabling tagged content 76 to be made available during use of an application that can be associated with one or more contacts for which tagged content 76 has been stored. At 188, initiation of an action associated with one or more contacts is detected, e.g., use of a communication based application, creation of a list associated with one or more contacts, etc. The data tagging module 52 may then determine at 190 if tagged content 76 associated with the one or more contacts should be automatically displayed. If not, the data tagging module 52 can wait until a request for tagged content 76 (e.g. via a menu option, short-cut key, etc.) is detected at 192. Whether automatically displayed at 190 or requested at 192, the data tagging module 52 may then determine at 194 the tagged content 76 associated with the one or more contacts, e.g. by accessing the corresponding contact profiles 53. In this example embodiment, before displaying the tagged content 76, the data tagging module 52 may determine at 196 whether or not relevant content 172 is to be highlighted. If the relevant content 172 in the application GUI 160 is to be highlighted, such relevant content is highlighted in the application or other item associated with the contact at 198.

The data tagging module 52 may then determine at 200 whether or not the tagged content 76 is to be filtered before being displayed. If the tagged content 76 is to be filtered, the filtered items to be displayed are determined at 202. The tagged content is then displayed at 203. As illustrated above, the tagged content 76 may be displayed as tagged information 164 using, for example, a docked banner 162 or a floating window 168. In this example embodiment, the data tagging module 52 determines at 204 whether or not the tagged information 164 should be docked. If so, the tagged information 164 may be displayed using, for example, a banner 162, in a fixed position at 206. The data tagging module 52 may detect, at 208, that an attempt to drag the banner 162 away from the edge of the screen has been made. If it is determined at 204 that the tagged information 164 is not to be docked, or the data tagging module 52 detects a drag operation at 208, the tagged information 164 may then be displayed in a floating position at 210, e.g., using the floating window 168. The data tagging module 52 may detect, at 212, that an attempt to drag the floating window 168 towards from the edge of the screen has been made. If it is determined at 212 that a drag operation towards the edge has been initiated, the data tagging module 52 may then determine at 214 whether or not the drag operation is "sufficient" to dock the floating window 168, e.g., if the drag operation brings the floating window 168 relatively close to the edge of the screen. If not, the data tagging module 52 may continue to detect the drag operation. If the floating window 168 becomes close enough to the edge of the screen, the tagged information 164 may then be displayed in a docked position as described above beginning at 206.

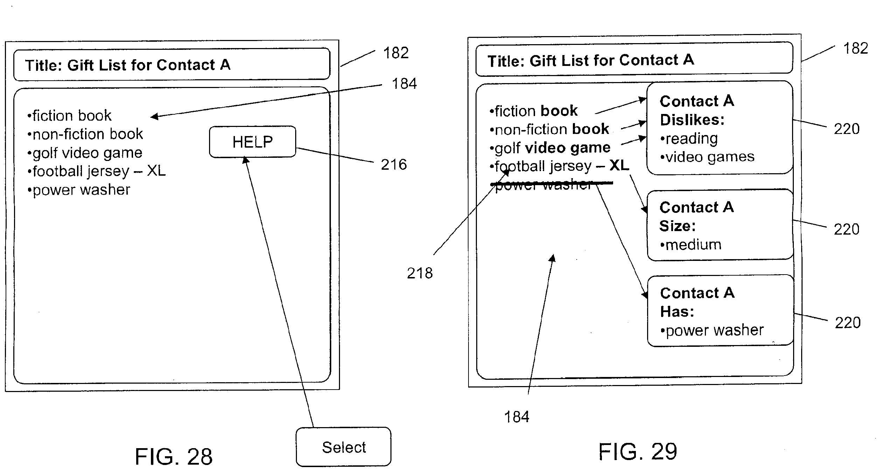

It has also be found that, in addition to making tagged content 76 available during an action associated with a particular one or more contacts, such tagged content 76 can be used to contribute to intelligence in performing that action. FIGS. 28 through 31 illustrate example embodiments wherein the tagged content 76 stored with a contact profile 53 is used to modify a list of items 184 for Contact A. In this example embodiment, the notes application 182 may, as shown in FIG. 28, include a help button 216 or other option (e.g., in a menu, short-cut key, etc.) for utilizing the tagged content 76 to modify, filter, or make suggestions regarding the items in the list 184. For example, FIG. 29 illustrates one example embodiment, wherein the tagged content 76 is displayed in a series of speech balloons 220 visually correlated to content in the list 184 by providing a modified list 218. As illustrated in the example embodiment UI for a notes application of FIG. 29, dislikes stored in relation to Contact A may be used to suggest items that may not be suitable as gifts, a clothing size for Contact A can be used to correct noted size in the modified list 218, and an item in the list 184 may be removed based on knowledge of Contact A already possessing that item. It can be appreciated that any available intelligence algorithms or analytics can be employed in making suggestions for modifying the list 184 and those shown in FIG. 29 are for illustrative purposes only.

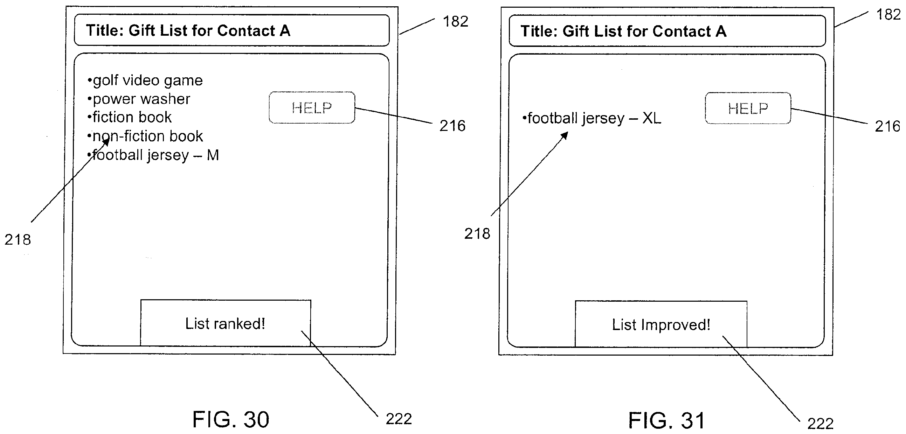

FIG. 30 illustrates another example embodiment UI for a notes application, wherein selection of the help button 216 (now "greyed out" to emphasize its use), generates the modified list 218 by ranking and reordering items in the list 184. In this example embodiment, a notice 222 is also displayed to indicate what, if anything, has been done to the original list 184 in generating the modified list 218. FIG. 31 illustrates another example embodiment UI for a notes application, wherein items in the list 184 are removed to filter the original list 184 in generating a modified list 218 including only suitable items. It can be seen in example embodiment UI for a notes application of FIG. 31, that in addition to removing items that Contact A already owns or dislikes, the football jersey item is also modified to correct the size. As such, it can be appreciated that any combination of filtering, organizing, and modifying of the list 184 can be performed using the tagged content 76.

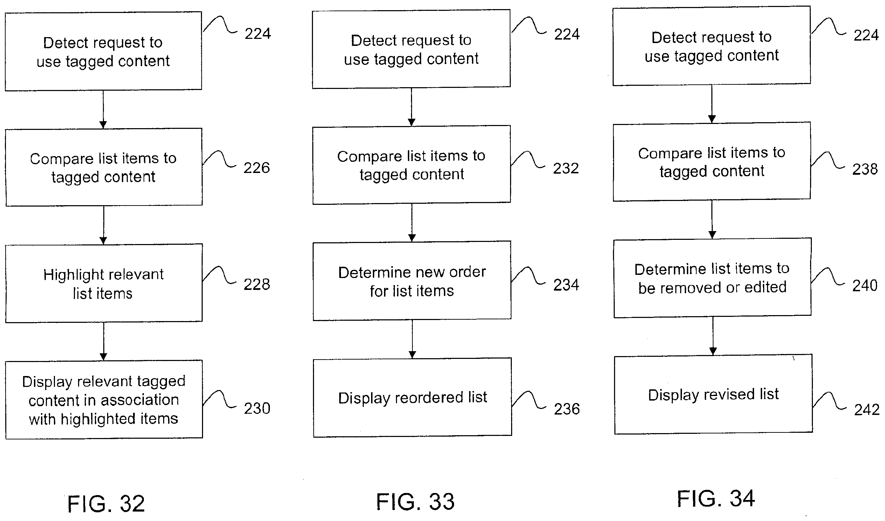

FIGS. 32 to 34 illustrate example sets of computer executable operations that may be performed in modifying a list 184 as illustrated in FIGS. 28 to 31. In FIG. 32, a request to use tagged content 76 is detected at 224, e.g., selection of the help button 216. The items in the list 184 are then compared to the tagged content 76 associated with the contact which is in turn associated with the list at 226. In this example embodiment, the relevant items in the list 184 are highlighted at 228, and the relevant tagged content 76 is displayed in association with the highlighted items, e.g. as shown in FIG. 29, at 230.

In FIG. 33 a request to use tagged content 76 is detected at 224, e.g., selection of the help button 216. The items in the list 184 are then compared to the tagged content 76 associated with the contact which is in turn associated with the list at 232 in order to determine a new order for the items in the list 184 at 234. A reordered list 218 is then displayed at 236.

In FIG. 34 a request to use tagged content 76 is detected at 224, e.g., selection of the help button 216. The items in the list 184 are then compared to the tagged content 76 associated with the contact which is in turn associated with the list at 238 in order to determine items in the list 184 that can be removed or edited at 240. A revised list 218 is then displayed at 242.

It can be appreciated that the sets of operations shown in FIGS. 32, 33, and 34 are shown independently for illustrative purposes only and that any one or more of these sets of operations may be performed after detecting a request to used the tagged content 76 in association with a list, e.g., by detecting selection of the help button 216.

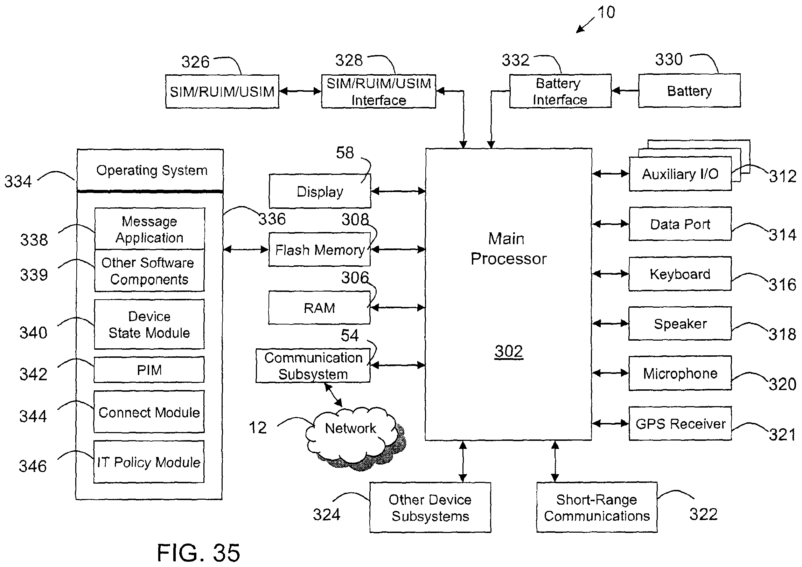

Referring now to FIG. 35, shown therein is a block diagram of an example embodiment of a mobile device 10. The mobile device 10 includes a number of components such as a main processor 302 that controls the overall operation of the mobile device 10. Communication functions, including data and voice communications, are performed through a communication subsystem 54. The communication subsystem 54 receives messages from and sends messages to a wireless network 12. In this example embodiment of the mobile device 10, the communication subsystem 54 is configured in accordance with the Global System for Mobile Communication (GSM) and General Packet Radio Services (GPRS) standards. The GSM/GPRS wireless network is used worldwide and it is expected that these standards will be superseded eventually by 3G and 4G networks such as EDGE, UMTS and HSDPA, LTE, Wi-Max etc. New standards are still being defined, but it is believed that they will have similarities to the network behaviour described herein, and it will also be understood by persons skilled in the art that the embodiments described herein are intended to use any other suitable standards that are developed in the future. The wireless link connecting the communication subsystem 54 with the wireless network 12 represents one or more different Radio Frequency (RF) channels, operating according to defined protocols specified for GSM/GPRS communications. With newer network protocols, these channels are capable of supporting both circuit switched voice communications and packet switched data communications.

The main processor 302 also interacts with additional subsystems such as a Random Access Memory (RAM) 306, a flash memory 308, a display 58, an auxiliary input/output (I/O) subsystem 312, a data port 314, a keyboard 316, a speaker 318, a microphone 320, GPS receiver 321, short-range communications 322 and other device subsystems 324.

Some of the subsystems of the mobile device 10 perform communication-related functions, whereas other subsystems may provide "resident" or on-device functions. By way of example, the display 310 and the keyboard 316 may be used for both communication-related functions, such as entering a text message for transmission over the network 12, and device-resident functions such as a calculator or task list.

The mobile device 10 can send and receive communication signals over the wireless network 12 after required network registration or activation procedures have been completed. Network access is associated with a subscriber or user of the mobile device 10. To identify a subscriber, the mobile device 10 may use a subscriber module. Examples of such subscriber modules include a Subscriber Identity Module (SIM) developed for GSM networks, a Removable User Identity Module (RUIM) developed for CDMA networks and a Universal Subscriber Identity Module (USIM) developed for 3G networks such as UMTS. In the example shown, a SIM/RUIM/USIM 326 is to be inserted into a SIM/RUIM/USIM interface 328 in order to communicate with a network. The SIM/RUIM/USIM component 326 is one type of a conventional "smart card" that can be used to identify a subscriber of the mobile device 10 and to personalize the mobile device 10, among other things. Without the component 326, the mobile device 10 may not be fully operational for communication with the wireless network 12. By inserting the SIM/RUIM/USIM 326 into the SIM/RUIM/USIM interface 328, a subscriber can access all subscribed services. Services may include: web browsing and messaging such as e-mail, voice mail, SMS, and MMS. More advanced services may include: point of sale, field service and sales force automation. The SIM/RUIM/USIM 326 includes a processor and memory for storing information. Once the SIM/RUIM/USIM 326 is inserted into the SIM/RUIM/USIM interface 328, it is coupled to the main processor 302. In order to identify the subscriber, the SIM/RUIM/USIM 326 can include some user parameters such as an International Mobile Subscriber Identity (IMSI). An advantage of using the SIM/RUIM/USIM 326 is that a subscriber is not necessarily bound by any single physical mobile device. The SIM/RUIM/USIM 326 may store additional subscriber information for a mobile device as well, including datebook (or calendar) information and recent call information. Alternatively, user identification information can also be programmed into the flash memory 308.

The mobile device 10 is typically a battery-powered device and includes a battery interface 332 for receiving one or more batteries 330 (typically rechargeable). In at least some embodiments, the battery 330 can be a smart battery with an embedded microprocessor. The battery interface 332 is coupled to a regulator (not shown), which assists the battery 330 in providing power V+ to the mobile device 10. Although current technology makes use of a battery, future technologies such as micro fuel cells may provide the power to the mobile device 10.

The mobile device 10 also includes an operating system 334 and software components 336 to 346 which are described in more detail below. The operating system 334 and the software components 336 to 346 that are executed by the main processor 302 are typically stored in a persistent store such as the flash memory 308, which may alternatively be a read-only memory (ROM) or similar storage element (not shown). Those skilled in the art will appreciate that portions of the operating system 334 and the software components 336 to 346, such as specific device applications, or parts thereof, may be temporarily loaded into a volatile store such as the RAM 306. Other software components can also be included, as is well known to those skilled in the art.

The subset of software applications 336 that control basic device operations, including data and voice communication applications, may be installed on the mobile device 10 during its manufacture. Other software applications include a message application 338 that can be any suitable software program that allows a user of the mobile device 10 to send and receive electronic messages. Various alternatives exist for the message application 338 as is well known to those skilled in the art. Messages that have been sent or received by the user are typically stored in the flash memory 308 of the mobile device 10 or some other suitable storage element in the mobile device 10. In at least some embodiments, some of the sent and received messages may be stored remotely from the mobile device 10 such as in a data store of an associated host system that the mobile device 10 communicates with.

The software applications can further include a device state module 340, a Personal Information Manager (PIM) 342, and other suitable modules (not shown). The device state module 340 provides persistence, i.e. the device state module 340 ensures that important device data is stored in persistent memory, such as the flash memory 308, so that the data is not lost when the mobile device 10 is turned off or loses power.

The PIM 342 includes functionality for organizing and managing data items of interest to the user, such as, but not limited to, e-mail, contacts, calendar events, voice mails, appointments, and task items. A PIM application has the ability to send and receive data items via the wireless network 12. PIM data items may be seamlessly integrated, synchronized, and updated via the wireless network 12 with the mobile device subscriber's corresponding data items stored and/or associated with a host computer system. This functionality creates a mirrored host computer on the mobile device 10 with respect to such items. This can be particularly advantageous when the host computer system is the mobile device subscriber's office computer system.

The mobile device 10 may also comprise a connect module 344, and an IT policy module 346. The connect module 344 implements the communication protocols that are required for the mobile device 10 to communicate with the wireless infrastructure and any host system, such as an enterprise system, that the mobile device 10 is authorized to interface with.

The connect module 344 includes a set of APIs that can be integrated with the mobile device 10 to allow the mobile device 10 to use any number of services associated with the enterprise system. The connect module 344 allows the mobile device 10 to establish an end-to-end secure, authenticated communication pipe with a host system (not shown). A subset of applications for which access is provided by the connect module 344 can be used to pass IT policy commands from the host system to the mobile device 10. This can be done in a wireless or wired manner. These instructions can then be passed to the IT policy module 346 to modify the configuration of the device 10. Alternatively, in some cases, the IT policy update can also be done over a wired connection.

The IT policy module 346 receives IT policy data that encodes the IT policy. The IT policy module 346 then ensures that the IT policy data is authenticated by the mobile device 10. The IT policy data can then be stored in the flash memory 306 in its native form. After the IT policy data is stored, a global notification can be sent by the IT policy module 346 to all of the applications residing on the mobile device 10. Applications for which the IT policy may be applicable then respond by reading the IT policy data to look for IT policy rules that are applicable.

Other types of software applications or components 339 can also be installed on the mobile device 10. These software applications 339 can be pre-installed applications (i.e. other than message application 338) or third party applications, which are added after the manufacture of the mobile device 10. Examples of third party applications include games, calculators, utilities, etc.

The additional applications 339 can be loaded onto the mobile device 10 through at least one of the wireless network 12, the auxiliary I/O subsystem 312, the data port 314, the short-range communications subsystem 322, or any other suitable device subsystem 324. This flexibility in application installation increases the functionality of the mobile device 10 and may provide enhanced on-device functions, communication-related functions, or both. For example, secure communication applications may enable electronic commerce functions and other such financial transactions to be performed using the mobile device 10.

The data port 314 enables a subscriber to set preferences through an external device or software application and extends the capabilities of the mobile device 10 by providing for information or software downloads to the mobile device 10 other than through a wireless communication network. The alternate download path may, for example, be used to load an encryption key onto the mobile device 10 through a direct and thus reliable and trusted connection to provide secure device communication.

The data port 314 can be any suitable port that enables data communication between the mobile device 10 and another computing device. The data port 314 can be a serial or a parallel port. In some instances, the data port 314 can be a USB port that includes data lines for data transfer and a supply line that can provide a charging current to charge the battery 330 of the mobile device 10.

The short-range communications subsystem 322 provides for communication between the mobile device 10 and different systems or devices, without the use of the wireless network 12. For example, the subsystem 322 may include an infrared device and associated circuits and components for short-range communication. Examples of short-range communication standards include standards developed by the Infrared Data Association (IrDA), Bluetooth, and the 802.11 family of standards developed by IEEE.

In use, a received signal such as a text message, an e-mail message, or web page download may be processed by the communication subsystem 54 and input to the main processor 302. The main processor 302 may then process the received signal for output to the display 310 or alternatively to the auxiliary I/O subsystem 312. A subscriber may also compose data items, such as e-mail messages, for example, using the keyboard 316 in conjunction with the display 310 and possibly the auxiliary I/O subsystem 312. The auxiliary subsystem 312 may include devices such as: a touch screen, mouse, track ball, infrared fingerprint detector, or a roller wheel with dynamic button pressing capability. The keyboard 316 is an alphanumeric keyboard and/or telephone-type keypad. However, other types of keyboards may also be used, such as a virtual or "soft" keyboard rendered as images on a touch screen. A composed item may be transmitted over the wireless network 12 through the communication subsystem 54.

For voice communications, the overall operation of the mobile device 10 in this example is substantially similar, except that the received signals are output to the speaker 318, and signals for transmission are generated by the microphone 320. Alternative voice or audio I/O subsystems, such as a voice message recording subsystem, can also be implemented on the mobile device 10. Although voice or audio signal output is accomplished primarily through the speaker 318, the display 310 can also be used to provide additional information such as the identity of a calling party, duration of a voice call, or other voice call related information.

It will be appreciated that any module or component exemplified herein that executes instructions may include or otherwise have access to computer readable media such as storage media, computer storage media, or data storage devices (removable and/or non-removable) such as, for example, magnetic disks, optical disks, or tape. Computer storage media may include volatile and non-volatile, removable and non-removable media implemented in any method or technology for storage of information, such as computer readable instructions, data structures, program modules, or other data. Examples of computer storage media include RAM, ROM, EEPROM, flash memory or other memory technology, CD-ROM, digital versatile disks (DVD) or other optical storage, magnetic cassettes, magnetic tape, magnetic disk storage or other magnetic storage devices, or any other medium which can be used to store the desired information and which can be accessed by an application, module, or both. Any such computer storage media may be part of the mobile device 10, any component of or related to the wireless infrastructure 14, etc., or accessible or connectable thereto. Any application or module herein described may be implemented using computer readable/executable instructions that may be stored or otherwise held by such computer readable media.

It will also be appreciated that the example embodiments and corresponding diagrams used herein are for illustrative purposes only. Different configurations and terminology can be used without departing from the principles expressed herein. For instance, components and modules can be added, deleted, modified, or arranged with differing connections without departing from these principles.

The steps or operations in the flow charts and diagrams described herein are just for example. There may be many variations to these steps or operations without departing from the spirit of the invention or inventions. For instance, the steps may be performed in a differing order, or steps may be added, deleted, or modified.

Although the above has been described with reference to certain specific embodiments, various modifications thereof will be apparent to those skilled in the art without departing from the scope of the claims appended hereto.

## Claims

1. A method comprising:
enabling content in a first application on a communication device to be selected (112); enabling selected content to be stored (115) in association with a contact profile for a contact associated with the first application;
detecting (188) initiation of an action associated with the contact within a second application; and
making at least a portion of the selected content available to the second application to enable the at least a portion of the selected content to be used with the second application, wherein the at least a portion of the selected content comprises a filtered list of items based on correlating content in the action associated with the contact within the second application to the selected content stored in association with the contact profile, and
wherein the at least a portion of the selected content is used with the second application by highlighting content (180) in the second application which is correlated to the at least a portion of the selected content.

2. The method according to claim 1, wherein the at least a portion of the selected content is used with the second application by displaying the at least a portion of the selected content with the second application.

3. The method according to claim 1, wherein the at least a portion of the selected content is used with the second application by modifying content in the second application.

4. The method according to any one of claims 1 to 3, wherein the content in the first application comprises any one or more of content displayed in the first application, content provided in an attachment to the first application, and content displayed upon selection of a link provided in the first application.

5. The method according to any one of claims 1 to 4, wherein content is selected in the first application by highlighting the content.

6. The method according to any one of claims 1 to 5, further comprising providing a prompt comprising options to accept (108) or reject (110) the selected content prior to storing the selected content.

7. The method according to any one of claims 1 to 6, further comprising enabling the selected content to be any one or more of: edited (102), categorized (104), and provided to one or more additional contact profiles (106).

8. The method according to any one of claims 1 to 7, further comprising enabling the selected content to be viewed in a third application displaying information associated with the contact profile.

9. The method according to any one of claims 1 to 8, wherein enabling the content in the first application to be selected comprises any one or more of automatically identifying the content, and enabling manual selection of the content using one or more available input mechanisms.

10. The method according to any one of claims 1 to 9, wherein the second application comprises a list of items associated with the contact profile, and the selected content is used to modify the list of items.

11. The method according to any one of claims 1 to 10, wherein the first application is associated with a communication-based application.

12. A computer readable medium comprising computer executable instructions, the computer executable instructions comprising instructions for performing the method according to any one of claims 1 to 11.

13. A communication device (10) comprising a processor, a display, memory, and one or more input mechanisms enabling selection of content provided on the display, the memory storing computer executable instructions for performing the method according to any one of claims 1 to 11.

## Patentansprüche

1. Verfahren, das Folgendes umfasst:
Ermöglichen, dass ein Inhalt in einer ersten Anwendung in einer Kommunikationsvorrichtung ausgewählt werden kann (112); Ermöglichen, dass der ausgewählte Inhalt in Verbindung mit einem Kontaktprofil für einen Kontakt, der mit der ersten Anwendung verknüpft ist, gespeichert werden kann (115);
Detektieren (188) einer Initiierung einer Aktion, die mit dem Kontakt innerhalb einer zweiten Anwendung verknüpft ist; und
Verfügbarmachen mindestens eines Abschnitts des ausgewählten Inhalts für die zweite Anwendung, damit der mindestens eine Abschnitt des ausgewählten Inhalts mit der zweiten Anwendung verwendet werden kann, wobei der mindestens eine Abschnitt des ausgewählten Inhalts eine gefilterte Liste mit Aufzählungspunkten umfasst, die auf dem Korrelieren von Inhalt in der Aktion, die mit dem Kontakt innerhalb einer zweiten Anwendung verknüpft ist, mit dem ausgewählten Inhalt, der in Verbindung mit dem Kontaktprofil gespeichert ist, basiert, und
wobei der mindestens eine Abschnitt des ausgewählten Inhalts mit der zweiten Anwendung verwendet wird, indem Inhalt in der zweiten Anwendung hervorgehoben wird (180), der mit dem mindestens einen Abschnitt des ausgewählten Inhalts korreliert ist.

2. Verfahren nach Anspruch 1, wobei der mindestens eine Abschnitt des ausgewählten Inhalts mit der zweiten Anwendung verwendet wird, indem der mindestens eine Abschnitt des ausgewählten Inhalts mit der zweiten Anwendung angezeigt wird.

3. Verfahren nach Anspruch 1, wobei der mindestens eine Abschnitt des ausgewählten Inhalts mit der zweiten Anwendung verwendet wird, indem der Inhalt in der zweiten Anwendung modifiziert wird.

4. Verfahren nach einem der Ansprüche 1 bis 3, wobei der Inhalt in der ersten Anwendung eines oder mehrere von Folgendem umfasst: Inhalt, der in der ersten Anwendung angezeigt wird, Inhalt, der in einem Anhang an der ersten Anwendung bereitgestellt wird, und Inhalt, der bei Auswahl eines Links angezeigt wird, der in der ersten Anwendung bereitgestellt ist.

5. Verfahren nach einem der Ansprüche 1 bis 4, wobei Inhalt in der ersten Anwendung durch Hervorheben des Inhalts ausgewählt wird.

6. Verfahren nach einem der Ansprüche 1 bis 5, das des Weiteren umfasst, eine Eingabeaufforderung bereitzustellen, die Optionen umfasst, den ausgewählten Inhalt anzunehmen (108) oder abzulehnen (110), bevor der ausgewählte Inhalt gespeichert wird.

7. Verfahren nach einem der Ansprüche 1 bis 6, das des Weiteren umfasst, es zu ermöglichen, dass der ausgewählte Inhalt eines oder mehrere von Folgendem sein kann: editiert (102), kategorisiert (104), und an ein oder mehrere zusätzliche Kontaktprofile übermittelt (106).

8. Verfahren nach einem der Ansprüche 1 bis 7, das des Weiteren umfasst, es zu ermöglichen, dass der ausgewählte Inhalt in einer dritten Anwendung betrachtet werden kann, die Informationen anzeigt, die mit dem Kontaktprofil verknüpft sind.

9. Verfahren nach einem der Ansprüche 1 bis 8, wobei das Ermöglichen, dass der Inhalt in der ersten Anwendung ausgewählt werden kann, eines oder mehrere von Folgendem umfasst: automatisches Identifizieren des Inhalts, und Ermöglichen einer manuellen Auswahl des Inhalts unter Verwendung eines oder mehrerer verfügbarer Eingabemechanismen.

10. Verfahren nach einem der Ansprüche 1 bis 9, wobei die zweite Anwendung eine Liste von Aufzählungspunkten umfasst, die mit dem Kontaktprofil verknüpft sind, und der ausgewählte Inhalt zum Modifizieren der Liste von Aufzählungspunkten verwendet wird.

11. Verfahren nach einem der Ansprüche 1 bis 10, wobei die erste Anwendung mit einer kommunikationsgestützten Anwendung verknüpft ist.

12. Computerlesbares Medium, das computerausführbare Instruktionen umfasst, wobei die computerausführbaren Instruktionen Instruktionen zum Ausführen des Verfahrens nach einem der Ansprüche 1 bis 11 umfassen.

13. Kommunikationsvorrichtung (10), die einen Prozessor, eine Anzeige, Speicher und einen oder mehrere Eingabemechanismen zum Ermöglichen einer Auswahl von Inhalt, der auf der Anzeige bereitgestellt wird, umfasst, wobei der Speicher computerausführbare Instruktionen zum Ausführen des Verfahrens nach einem der Ansprüche 1 bis 11 speichert.

## Revendications

1. Procédé comprenant les étapes consistant à :
permettre à un contenu, dans une première application, sur un dispositif de communication, d'être sélectionné (112) ; permettre au contenu sélectionné d'être stocké (115) en association avec un profil de contact pour un contact associé à la première application ;
détecter (188) le déclenchement d'une action associée au contact au sein d'une deuxième application ; et
rendre, au moins une partie du contenu sélectionné, disponible pour la deuxième application afin de permettre à l'au moins une partie du contenu sélectionné d'être employée avec la deuxième application, l'au moins une partie du contenu sélectionné comprenant une liste filtrée d'articles basée sur une mise en corrélation du contenu de l'action associée au contact, au sein de la deuxième application, avec le contenu sélectionné stocké en association avec le profil de contact, et
l'au moins une partie du contenu sélectionné étant utilisée avec la deuxième application en mettant en évidence le contenu (180) de la deuxième application qui est en corrélation avec l'au moins une partie du contenu sélectionné.

2. Procédé selon la revendication 1, dans lequel l'au moins une partie du contenu sélectionné est employée avec la deuxième application en affichant l'au moins une partie du contenu sélectionné avec la deuxième application.

3. Procédé selon la revendication 1, dans lequel l'au moins une partie du contenu sélectionné est employée avec la deuxième application en modifiant le contenu de la deuxième application.

4. Procédé selon l'une quelconque des revendications 1 à 3, dans lequel le contenu de la première application comprend un ou plusieurs des suivants : contenu affiché dans la première application, contenu fourni dans une pièce jointe à la première application, et contenu affiché lors de la sélection d'un lien fourni dans la première application.

5. Procédé selon l'une quelconque des revendications 1 à 4, dans lequel le contenu est sélectionné dans la première application en mettant en évidence le contenu.

6. Procédé selon l'une quelconque des revendications 1 à 5, comprenant, en outre, la fourniture d'une invite comprenant des options pour accepter (108) ou rejeter (110) le contenu sélectionné avant de stocker le contenu sélectionné.

7. Procédé selon l'une quelconque des revendications 1 à 6, consistant, en outre, à permettre que le contenu sélectionné soit autorisé à être un ou plusieurs des suivants : modifié (102), catégorisé (104), et fourni à un ou plusieurs profils de contact supplémentaires (106).

8. Procédé selon l'une quelconque des revendications 1 à 7, consistant, en outre, à permettre que le contenu sélectionné soit autorisé à être vu dans une troisième application affichant des informations associées au profil de contact.

9. Procédé selon l'une quelconque des revendications 1 à 8, dans lequel permettre au contenu de la première application d'être sélectionné comprend une ou plusieurs des opérations suivantes : identification automatique du contenu, et autorisation d'une sélection manuelle du contenu en utilisant un ou plusieurs mécanismes d'entrée disponibles.

10. Procédé selon l'une quelconque des revendications 1 à 9, dans lequel la deuxième application comprend une liste d'articles associés au profil de contact, et le contenu sélectionné est utilisé pour modifier la liste d'articles.

11. Procédé selon l'une quelconque des revendications 1 à 10, dans lequel la première application est associée à une application à base de communication.

12. Support pouvant être lu sur ordinateur comprenant des instructions exécutables par ordinateur, les instructions exécutables par ordinateur comprenant des instructions pour mettre en oeuvre le procédé selon l'une quelconque des revendications 1 à 11.

13. Dispositif de communication (10) comprenant un processeur, un affichage, une mémoire, et un ou plusieurs mécanismes d'entrée permettant la sélection de contenu fourni sur l'affichage, la mémoire stockant des instructions exécutables par ordinateur pour mettre en oeuvre le procédé selon l'une quelconque des revendications 1 à 11.
